# EUROPEAN PATENT SPECIFICATION

(11) **EP 4 033 325 B1**
(45) Date of publication and mention of the grant of the patent: **20.03.2024**
(21) Application number: 20912784.4
(22) Date of filing: 24.08.2020
(51) Int. Cl.: G05D 1/02, G05D 1/00, G01C 21/00, G01C 21/20

(54) **METHOD FOR DETERMINING A WORKING START POINT IN A ROBOT MOVEMENT LIMITING FRAME AND ROBOT MOVEMENT CONTROL METHOD**
VERFAHREN ZUR BESTIMMUNG EINES ARBEITSSTARTPUNKTES INNERHALB EINES ROBOTERBEWEGUNGSBEGRENZUNGSRAHMENS UND VERFAHREN ZUR BEWEGUNGSSTEUERUNG
PROCÉDÉ DE DÉTERMINATION D'UN POINT DE DÉPART DANS LES LIMITES D'UN DOMAINE DE DÉPLACEMENT D'UN ROBOT ET PROCÉDÉ DE COMMANDE DE MOUVEMENT DUDIT ROBOT

(30) Priority: 09.01.2020 CN 202010021850
(43) Date of publication of application: 27.07.2022
(73) Proprietor: Amicro Semiconductor Co., Ltd., Hengqin New District, Zhuhai City Guangdong 519000 (CN)
(72) Inventor: DAI, Jianfeng, Zhuhai, Guangdong 519000 (CN)
(74) Representative: Penza, Giancarlo
(86) International application number: PCT/CN2020/110692
(87) International publication number: WO 2021/139165

(56) References cited:
- CN-A- 107 378 953
- CN-A- 108 444 484
- CN-A- 108 507 578
- CN-A- 108 803 589
- CN-A- 108 803 589
- CN-A- 108 829 095
- CN-A- 110 385 719
- CN-A- 111 240 322
- US-A1- 2019 012 571
- US-A1- 2019 045 992
- Jamie Andrews: "Neato App In-depth Overview - October 2019", , 9 October 2019 (2019-10-09), XP055971139, Retrieved from the Internet: URL:https://www.youtube.com/watch?v=LdJBut bqYfI [retrieved on 2022-10-13]

## Description

### Cross-Reference to Related Application

The present disclosure claims the priority of Chinese Patent Application No. 202010021850.5, filed to the China National Intellectual Property Administration on January 9, 2020 and entitled " Method for Determining Working Start Point of Movement Limit Frame of Robot and Method for Controlling Movement of Robot".

### Technical Field

The disclosure relates to the technical field of robot map positioning, in particular to a method for determining a working start point in a movement limit frame of a robot and a method for controlling movement of a robot.

### Background

A cleaning robot carries out positioning and mapping by means of cameras or laser beams, so that it can not only obtain coordinates of current positions when a cleaning area to be cleaned, so as to form an original cleaning record map, but also obtain a scanning record map in the form of coordinate bitmaps, etc. In theory, after an application (APP) for controlling the cleaning robot is started, the scanning record map can be downloaded from the cloud. The APP draws a movement track of the cleaning robot according to the scanning record map such that movement situations and cleaning record situations of the cleaning robots can be displayed on the APPs in real time. Since only the movement track of the cleaning robot is displayed on the APP, the control which is carried out to the cleaning robot through the APP is very limited under the existing technical conditions, some functions based on a robot map of the cleaning robot cannot be performed normally, and terminals cannot accurately control the robot to work in a limited area to be cleaned in the prior art.

US 2019/0045992 discloses a method for operating a floor treatment device that travels autonomously within an environment, wherein the floor treatment device performs a treatment of a defined and spatially limited partial surface region of the environment. During the treatment of the partial surface region a detection device of the floor treatment device measures a treatment status of the partial surface region, compares the treatment status is with a defined reference status and continues a treatment of the partial surface region until the defined reference status is reached. In order to improve the result of a floor treatment operation, a user defines the reference status manually and transmits it to the floor treatment device.

CN 108 803 589 A discloses a virtual wall system for a robot including a movement device, configured to control a robot to move; a first electronic map, configured to describe information on environment where the robot is located; a virtual wall module, configured to form a virtual wall to divide the first electronic map into zones; a storage device, configured to store the first electronic map of the environment where the robot is located.

CN 108 829 095 A discloses a geo-fence setting method. The method comprises: geo-fence information is obtained; according to the geo-fence information, a geo-fence area is marked on an electronic map, wherein the geo-fence area marked at the electronic map is used for controlling the motion range of a robot; the operation of acquiring geo-fence information includes acquiring geo-fence information from a robot and the robot obtains the geo-fence information by the following steps : the robot with a virtual wall detecting device moves near a virtual wall arranged in an area needing geo-fence establishment; and in response to detection of the virtual wall by the a virtual wall detecting device, the location information of the virtual wall detecting device is recorded as the geo-fence informationor graphic information or picture information is obtained based on the location information and the graphic information or picture information is used as the geo-fence information. In addition, the disclosure also provides a geo-fence setting system.

### Summary

In order to solve the above technical problem, the disclosure provides a method for determining a working start point in a movement limit frame of a robot and a method for controlling movement of a robot, which can automatically generate the working start point in a limit frame according to an overlap relation between a map area framed by the limit frame and a map constructed by the robot, so as to improve user experience. The technical solutions are as follows:
A method for determining a working start point in a movement limit frame of a robot, includes: setting a limit frame on a map constructed by the robot; and selecting, according to an overlap relation between a map area framed by the limit frame and the map constructed by the robot, an overlap area for developing a working start point of the robot, and determining a center point of the overlap area which is selected as the working start point in the limit frame of the robot; and the limit frame encloses an area for limiting a working range of the robot. According to the technical solution, a user manually defines the limit frame for controlling a moving range of the robot such that the user can mark out a working area of the robot according to understandings of environment characteristics. Then the working start point in the limit frame is automatically generated according to the overlap relation between the map area framed by the limit frame user-defined and the map constructed by the robot, so as to enhance environmental adaptability of the working start point, such that working partitions of the robot meeting requirements of the user are achieved, and the user can change the working area of the robot more accurately and flexibly by means of a terminal. Thus, a degree of intelligent control by a mobile terminal is enhanced.

Further, selecting, according to the overlap relation between the map area framed by the limit frame and the map constructed by the robot, the overlap area for developing the working start point of the robot, and determining the center point of the overlap area which is selected as the working start point in the limit frame of the robot include: selecting, in a case that the limit frame is completely set in any one of map areas in the map constructed by the robot and does not span different map areas, an area covered with the limit frame as the overlap area for developing the working start point of the robot, and determining the center point of the area covered with the limit frame as the working start point in the limit frame of the robot; and the map constructed by the robot includes: a current map constructed by the robot in an unrecognized environment, a historical map matching a recognized environment, and an untraversed area not covered with the historical map and the current map. According to the technical solution, the limit frame can be set in the case of the current map, the historical map or no map, and the area framed by the limit frame in the current map is preferably selected as the overlap area for developing the working start point of the robot, such that accuracy of the working start point which is determined is improved, and mistaken detection of boundaries of the limit frame by the robot due to the existence of an interference target is prevented. Therefore, blocking effects of virtual rectangular frames set by a user are enhanced in various terminal map environments.

Further, displaying, after a mobile terminal receives map information constructed by the robot, the map information in a pre-configured map coordinate area on a screen, and the pre-configured map coordinate area is a global grid map area;. when the mobile terminal detects an operation instruction of setting the limit frame, a touch control signal formed on the screen into the limit frame and displaying the limit frame in the map shown on the screen, controlling the mobile terminal to transmit the map information of the limit frame that has been set to the robot. Thus, an effect of visual operation by a user is enhanced.

Further, on the screen of the mobile terminal, the current map is displayed above the historical map, the current map and the historical map partially or completely overlap, and the current map and the historical map partially or completely cover the untraversed area. According to the technical solution, the map information displayed on the screen of the mobile terminal reflects a change condition of an actual physical environment in time, that is conducive to a user to frame an effective working area and select a proper working start point according to the map information.

Further, recognizing an environment by the robot includes: matching environmental characteristic information currently collected by the robot with environmental characteristic information which is pre-stored; judging, in a case that matching succeeds, that the environmental characteristic information currently collected belongs to environmental characteristic information in the historical map, reading the historical map into the pre-configured map coordinate area, and constructing the current map to cover the historical map; and judging, in a case that matching fails, the environmental characteristic information currently collected belongs to brand-new environmental characteristic information, and directly constructing the current map in the pre-configured map coordinate area; and an area not covered with the historical map and the current map in the pre-configured map coordinate area is determined as the untraversed area, and the pre-configured map coordinate area is set on the screen of the mobile terminal. According to the technical solution, by the current map to cover the historical map, map errors caused by slipping or collision of the robot with an obstacle can be corrected, such that conditions are created for accurately limiting a movement working area of the robot later.

Further, the limit frame is set as a rectangular frame, and the map information of the rectangular frame received by the robot includes coordinates of an upper-left corner and coordinates of a lower-right corner of the rectangular frame; and after the robot receives coordinate information of the rectangular frame, a corresponding rectangular frame is framed, according to the coordinate information, on the map constructed by the robot, virtual boundaries enclosing the rectangular frame are determined, and further the overlap area of the map area framed by the rectangular frame and the map constructed by the robot is determined. Since the limit frame is set as the rectangular frame, computational complexity of virtual boundary coordinates of the rectangular frame can be simplified, and coordinate information of the working start point can be quickly determined.

A method for controlling movement of a robot, including: controlling, after a working start point is determined through the method for determining the working start point, the robot to move from a current position to the working start point; controlling the robot to traverse a corresponding area in one direction of the working start point according to a planned path, and controlling the robot to return to the working start point to continue to traverse a corresponding area in an opposite direction according to a planned path of the same type; and controlling the robot to travel along boundaries of a limit frame. According to the technical solution, the robot is controlled to not step out of the limit frame after moving from the working start point until a working area corresponding to the limit frame is traversed, such that a traversal coverage rate of the robot in the limit frame is improved.

Further, the movement for controlling movement further includes: setting a pre-judgment area surrounding each boundary enclosing the movement limit frame, any one of the pre-judgment area is an area where part of the area is within the movement limit frame and the other part of area is outside the movement limit frame; judging, when it is detected that the robot enters the pre-judgment area in a process that the robot traverses the limit frame, whether a current direction of the robot faces one boundary of the limit frame and whether a straight-line distance between the robot and a reference point is greater than or equal to a straight-line distance between the reference point and a center point of the boundary, if the current direction of the robot faces the boundary of the limit frame and the straight-line distance between the robot and the reference point is greater than or equal to the straight-line distance between the reference point and the center point of the boundary, adjusting a movement direction of the robot to be opposite the current direction of the robot, and controlling the robot to continue to move according to the planned path or to keep traveling along the boundaries; and if the current direction of the robot doesn't face the boundary of the limit frame, or if the straight-line distance between the robot and the reference point is less than the straight-line distance between the reference point and the center point of the boundary, controlling the robot to travel according to the planned path or to keep traveling along the boundaries; and the reference point is a coordinate point, the coordinate point and the robot are positioned on a same side of the boundary of the limit frame, and a vertical distance between the coordinate point and the center point of the boundary of the limit frame equals a preset length. According to the technical solution, the pre-judgment areas are set on the two sides of each of the boundary of the limit frame, and the reference point is set on a same side of a position where the robot travels, such that whether the robot travels to the boundary of the limit frame along the planned path or along the boundary can be accurately judged, an optimal control effect of distance between the robot and the boundary of the limit frame is ensured, and the robot is prevented from traveling out of the limit frame.

Further, the method for controlling movement further includes: judging whether the robot traverses a map area framed by the limit frame currently; selecting, after it is determined that the robot traverses the map area framed by the limit frame currently, one limit frame which is closest to the working start point of the limit frame currently from other limit frames, and determining the limit frame which is selected as a next target limit frame; and controlling the robot to cross one boundary of the limit frame to move to a working start point of the next target limit frame; and more than one limiting frame is set on the map constructed by the robot. In the technical solution, the map area framed by the limit frame is not a fixed defined area, a user determines a plurality of target working areas by self-defining a plurality of limit frames, and controls the robot to sequentially traverse the working areas by determining corresponding working start points, such that the robot can be better adapted to different map environments.

### Brief Description of the Drawings

Fig. 1 is a schematic distribution diagram, on the premise of not calling and displaying a historical map, in a case that a rectangular frame S3 is completely positioned in an untraversed area R3 and positioned outside a current map R1.
Fig. 2 is a schematic distribution diagram, on the premise of not calling and displaying a historical map, in a case that one part of a rectangular frame S6 is positioned in an untraversed area R3, and the other part of the rectangular frame S6 is positioned in a current map R1.
Fig. 3 is a schematic distribution diagram, on the premise of not calling and displaying a historical map, in a case that a rectangular frame S1 is completely positioned in a current map R1.
Fig. 4 is a schematic distribution diagram, on the premise of displaying a historical map R0, in a case that a rectangular frame S7 is completely positioned in an untraversed area R3 and positioned outside a current map R1 and the historical map R0.
Fig. 5 is a schematic distribution diagram, on the premise of displaying a historical map R0, in a case that one part of a rectangular frame S5 is positioned in an untraversed area R3, and the other part of the rectangular frame S5 is positioned in the historical map R0.
Fig. 6 is a schematic distribution diagram, on the premise of displaying a historical map R0, in a case that a rectangular frame S2 is completely positioned in the historical map R0.
Fig. 7 is a schematic distribution diagram, on the premise of displaying a historical map R0, in a case that one part of a rectangular frame S4 is positioned in the historical map R0, and the other part of the rectangular frame S4 is positioned in a current map R1.
Fig. 8 is a schematic distribution diagram, on the premise of displaying a historical map R0, in a case that a first part of a rectangular frame S8 is positioned in the historical map R0, a second part of the rectangular frame S8 is positioned in a current map R1, and the other parts of the rectangular frame S8 are positioned in an untraversed area R3, where the first part is different from the second part.
Fig. 9 is a schematic analysis diagram in the case that a robot approaches and collides with a boundary of a limit frame.

### Detailed Description of the Embodiments

The technical solutions in the embodiments of the disclosure will be described in detail below with reference to the accompanying drawings in the embodiments of the disclosure. It should be understood that the specific embodiments described below are merely used to explain the disclosure, and are not used to limit the disclosure.

The disclosure provides a method for determining a working start point in a movement limit frame of a robot. An execution subject of the method for determining the working start point is a processor or a control chip of the robot, and the processor or the control chip of the robot further needs to read map information from a nonvolatile memory. The robot can be a cleaning robot, a floor washing robot, an air purification robot, a logistics robot, a weeding robot, a commercial service robot, etc. For ease of description, it is directly described as a robot. The robot carrier of the disclosure is provided with a camera for map correction after the robot slips. As an example of the disclosure, the camera can be arranged at any angle and any position in the middle of the robot, but can not be shielded by any interference object. An optical flow sensor is placed on a robot base (the sensor can be placed on any position of the base), and is used for detecting relative displacement coordinates of the robot. The base of the mobile robot is used for fixedly carrying an universal wheel for controlling an advancing direction of the robot, and a control board and a gyroscope of the robot (the gyroscope can be placed at any position of the control board of the robot). The robot carrier of the disclosure is further provided with a sensor capable of detecting a distance from a wall. The sensor for detecting the distance from the wall can be an ultrasonic distance sensor, an infrared intensity detection sensor, an infrared distance sensor, a physical switch detection collision sensor, a laser radar, etc., where the laser radar can detect characteristics such as a position and a speed of a target by emitting a laser beam. The robot can detect environmental characteristic information by means of the sensor, then the robot is positioned through a simultaneous localization and mapping (slam) algorithm, a corresponding grid map is constructed, and the environmental characteristic information detected by the sensor is marked in a corresponding grid area of the grid map. The robot is further configured with a communication unit for establishing a communication connection between the robot and an external terminal or server, so as to realize data communication between the robot and the external terminal or the server. For example, a connection with the robot is established by a pre-developed matching application (APP), or a communication connection is established by accessing a cloud server networked with the robot. The specific connection mode is not limited in the embodiment.

An embodiment of the disclosure provides a method for determining a working start point in a movement limit frame of a robot, which specifically includes: setting a limit frame on a map constructed by the robot at first, where the constructed map can include a grid map, a dot matrix map, a color block map or other types of maps, and can reflect a current environment situation of the robot, and the constructed map is a global grid map obtained without slipping, and is relatively accurate. Each embodiment of the disclosure is described by taking a grid map as an example. The limit frame can be set by different modes. For example, the robot is controlled to travel once at boundaries where the limit frame needs to be set, coordinate positions and directions during traveling are recorded, and the coordinate positions are marked as virtual obstacle units. The virtual obstacle units form limit frames in various shapes, which include rectangular frames, trapezoidal frames, circular frames, square frames, etc. and the virtual obstacle units are grid cells where the robot can normally travel through actually, but can not travel through when traveling according to map navigation. Otherwise a user directly uses a mouse or a touch manner to define the limit frames at corresponding positions on a display terminal of the map, and the grid cells corresponding to the positions of the defined frames are the grid cells marked as the boundaries of the limit frames. The grid cell is the smallest cell constituting the grid map. Then, selecting, according to an overlap relation between a map area framed by the limit frame and the map constructed by the robot, an overlap area for developing a working start point of the robot, and determining a center point of the overlap area which is selected as the working start point in the limit frame of the robot, and the limit frame encloses an area for limiting a working range of the robot. In the embodiment, the overlap area of the map area framed by the limit frame and the map constructed by the robot is selected as a working starting position of the robot, such that coordinates of the working starting position of the robot can be positioned in various map environments constructed by the robot. The user defines the limit frame for controlling the moving range of the robot on a coordinate plane corresponding to the map constructed by the robot such that working areas and non-working areas of the robot in various map environments (including non-map environments) can be marked out, and environmental adaptability of the working start point of the robot is enhanced. A user can select one target working area by means of a terminal according to the requirements of an actual environment, such as an area which the robot needs to clean, where the area to be cleaned has, under a global coordinate system, an overlap area with the map constructed by the robot, and the robot is guided to a center point of the overlap area to start cleaning. Therefore, the robot starts cleaning from a more accurate position and can collect accurate map information which is known, so as to be prevented from traveling out of the limit frame. Thus, a person skilled in the art can configure determination strategies of target working area of the robot according to actual requirements, such that the working area of the robot can be changed more accurately and flexibly. Thus, a degree of intelligent control by a mobile terminal is enhanced. A user can have more active control right for a working movement of the robot.

It is worth noting that the map constructed by the robot includes: a current map constructed by the robot in an unrecognized environment, a historical map matching a recognized environment, and an untraversed area not covered with the historical map and the current map.

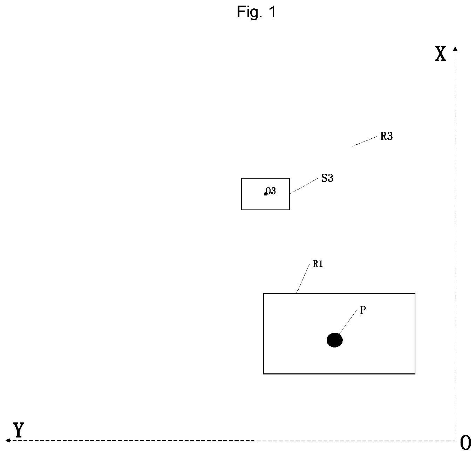

The steps of selecting, according to the overlap relation between the map area framed by the limit frame and the map constructed by the robot, the overlap area for developing the working start point of the robot, and determining the center point of the overlap area which is selected as the working start point in the limit frame of the robot include: selecting, in a case that the limit frame is completely set in any one of map areas in the map constructed by the robot and does not span different map areas, an area covered with the limit frame as the overlap area for developing the working start point of the robot, and determining the center point of the area covered with the limit frame as the working start point in the limit frame of the robot Specifically, according to distributions of the limit frames in various types of maps constructed by the robot, embodiments corresponding to Fig. 1, Fig. 3, Fig. 4 and Fig. 6 are provided.

Fig. 1 is a schematic distribution diagram, on the premise of not calling and displaying a historical map, in a case that a rectangular frame S3 is completely positioned in an untraversed area R3 and positioned outside a current map R1. In a pre-configured map coordinate area, that is, in a global coordinate system YOX corresponding to Fig. 1, a robot P matches, at a current position, currently collected environmental characteristic information with pre-stored environmental characteristic information. The robot in the embodiment detects, by means of a visual technical means, that collected environmental image characteristic points do not match environmental characteristic information in a pre-stored image library of the robot. Thus, it is determined that in a new environment, the robot does not need to read historical map information from a nonvolatile memory and only constructs the current map R1 in real time, and the robot displays the current map R1 on a screen interface of a mobile terminal. Then, a user can manually set the rectangular frame S3 on the screen of the mobile terminal according to actual requirements, and set a limit frame completely positioned in the untraversed area R3, where the rectangular frame S3 is completely positioned in the untraversed area R3, such that the rectangular frame S3 is used as the overlap area for developing the working start point of the robot. After that, a center point 03 of an area covered by the rectangular frame S3 in the coordinate system YOX is determined as the working start point of the robot in the limit frame. Since the current map R1 constructed by the robot P in Fig. 1 has a relatively small area, the user generally does not define the rectangular frame S3 in the current map R1, but sets a preferable traversal area of the robot P in the untraversed area R3 outside the current map R1, so as to improve efficiency of traversing a working area by the robot. It is worth noting that when the mobile terminal detects an operation instruction of setting the limit frame, the mobile terminal is first controlled to transmit map coordinate information of the limit frame included in the operation instruction to the robot, and after the mobile terminal receives a response confirmation signal from the robot, a touch control signal (corresponding to the limit frame set by the user in a touch manner on the display screen of the mobile terminal) formed on the screen of the mobile terminal is converted into the rectangular frame S3 to be displayed in a map shown on the screen, which can be understood that the rectangular frame S3 is displayed in the coordinate system YOX and positioned outside the current map R1.

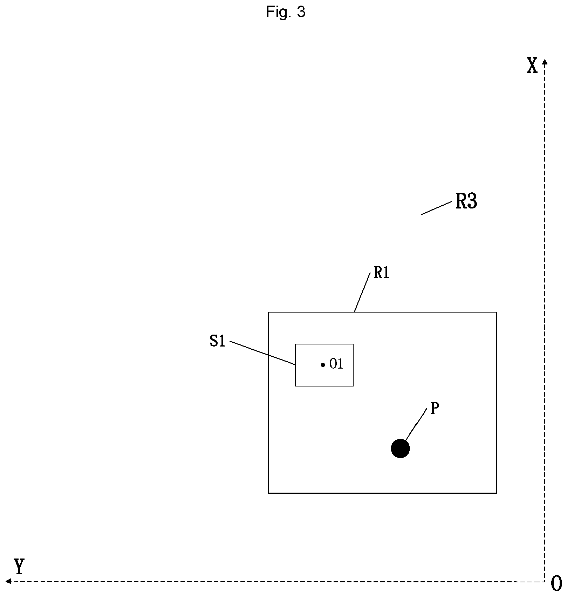

Fig. 3 is a schematic distribution diagram, on the premise of not calling and displaying a historical map, in a case that a rectangular frame S1 is completely positioned in a current map R1. In a pre-configured map coordinate area, that is, in a global coordinate system YOX corresponding to Fig. 3, a robot P matches, at a current position, currently collected environmental characteristic information with pre-stored environmental characteristic information. The robot in the embodiment detects, by means of a visual technical means, that collected environmental image characteristic points do not match environmental characteristic information in a pre-stored image library of the robot. Thus, it is determined that in a new environment, the robot does not need to read historical map information from a nonvolatile memory thereof, and only constructs the current map R1 in real time, and the robot displays the current map R1 on an interface of a mobile terminal. In this case, the current map R1 constructed by the robot P has a relatively large coverage area, a user can manually set the rectangular frame S1 in the larger current map R1 on a screen of the mobile terminal and set a limit frame which is completely positioned in the current map R1, where since the rectangular frame S1 is completely positioned in the current map R1, the rectangular frame S1 is used as the overlap area for developing the working start point of the robot. Then, a center point O1 of an area covered by the rectangular frame S1 in the coordinate system YOX is determined as the working start point of the robot in the limit frame. The robot P primarily traverses the rectangular frame S1 defined in the current map R1, such that accuracy of traversing a working area by the robot is improved, and the situation that the robot travels out of the limit frame due to erroneous determination is prevented. It is worth noting that when the mobile terminal detects an operation instruction of setting the limit frame, the mobile terminal is first controlled to transmit map coordinate information of the limit frame included in the operation instruction to the robot, and after the mobile terminal receives a response confirmation signal from the robot, a touch control signal (corresponding to the limit frame set by the user in a touch manner on the display screen of the mobile terminal) formed on the screen of the mobile terminal is converted into the rectangular frame S1 to be displayed in a map shown on the screen, which can be understood that the rectangular frame S1 is displayed in the coordinate system YOX and positioned in the current map R1.

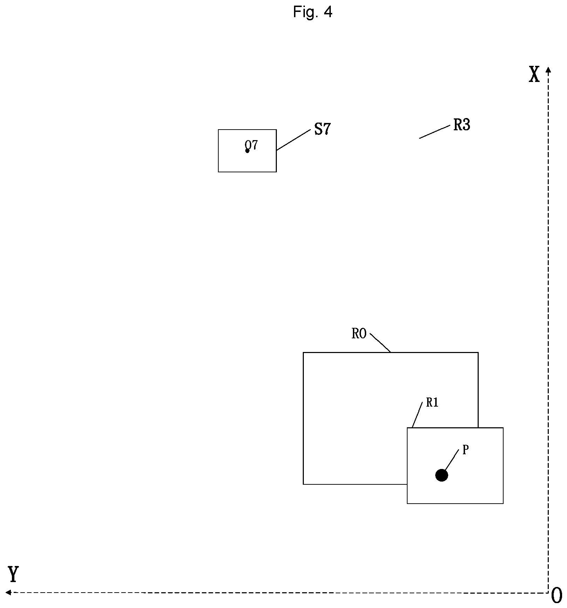

Fig. 4 is a schematic distribution diagram, on the premise of calling and displaying a historical map, in a case that a rectangular frame S7 is completely positioned in an untraversed area R3 and positioned outside a current map R1 and a historical map R0. In a pre-configured map coordinate area, that is, in a global coordinate system YOX corresponding to Fig. 4, a robot P matches, at a current position, currently collected environmental characteristic information with pre-stored environmental characteristic information. The robot in the embodiment detects, by means of a visual technical means, that collected environmental image characteristic points match environmental characteristic information in a pre-stored image library of the robot. Thus, it is determined that the robot can read out historical map information from a nonvolatile memory in a traversed environment and then sends the historical map R0 to a cloud server by means of WIFI, and the mobile terminal obtains the historical map R0 from the cloud server and displays the historical map R0 on a screen interface of the mobile terminal, such that the historical map R0 is read into a pre-configured map coordinate area. At the same time, the current map R1 constructed by the robot P is also displayed on the screen interface of the mobile terminal, such that the current map R1 covers the historical map R0. Since the robot P calls out the historical map R0 of one position and constructs the current map R1 matching an actual situation of the position, the historical map R0 and the current map R1 certainly have map areas representing the same environmental characteristics, that is, there certainly is an overlap area in the same pre-configured map coordinate area (in the global coordinate system YOX corresponding to Fig. 4). After that, a user can manually set the rectangular frame S7 on the screen of the mobile terminal according to actual requirements. Since the current map R1 constructed by the robot P in Fig. 4 and the historical map R0 which is read out both have relatively small areas, the user can not conveniently use the limit frame to frame the current map R1 or the historical map R0, such that a preferable traversal area of the robot P is set in the untraversed area R3 outside the current map R1 and the historical map R0, so as to improve efficiency of traversing a working area by the robot. The user sets a limit frame completely positioned in the untraversed area R3. Since the rectangular frame S7 is completely positioned in the untraversed area R3, the rectangular frame S7 is used as the overlap area for developing the working start point of the robot, and a center point 07 of an area covered by the rectangular frame S7 in the coordinate system YOX is determined as the working start point of the robot in the limit frame. It is worth noting that when the mobile terminal detects an operation instruction of setting the limit frame, the mobile terminal is first controlled to transmit map coordinate information of the limit frame included in the operation instruction to the robot, and after the mobile terminal receives a response confirmation signal from the robot, a touch control signal (corresponding to the limit frame set by the user in a touch manner on the display screen of the mobile terminal) formed on the screen of the mobile terminal is converted into the rectangular frame S7 to be displayed in a map shown on the screen, which can be understood that the rectangular frame S7 is displayed in the coordinate system YOX and positioned outside the current map R1.

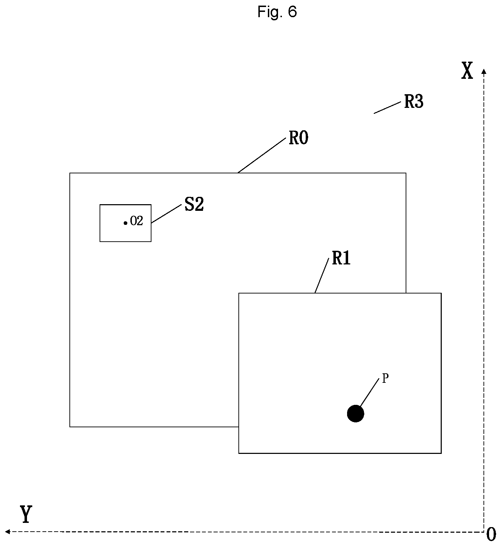

Fig. 6 is a schematic distribution diagram, on the premise of displaying a historical map, in a case that a rectangular frame S2 is completely positioned in a historical map R0 and positioned outside a current map R1. In a pre-configured map coordinate area, that is, in a global coordinate system YOX corresponding to Fig. 6, a robot P matches, at a current position, currently collected environmental characteristic information with pre-stored environmental characteristic information. The robot in the embodiment detects, by means of a visual technical means, that collected environmental image characteristic points match environmental characteristic information in a pre-stored image library of the robot. Thus, it is determined that the robot can read out historical map information from a nonvolatile memory in a traversed environment and then sends the historical map R0 to a cloud server by means of WIFI, and the mobile terminal obtains the historical map R0 from the cloud server and displays the historical map R0 on a screen interface of the mobile terminal, such that the historical map R0 is read into the pre-configured map coordinate area. At the same time, the current map R1 constructed by the robot P is also displayed on the screen interface of the mobile terminal. The current map R1 constructed by the robot P in Fig. 6 and the read historical map R0 both have relatively large areas, and the historical map R0 has the area relatively larger than that of the current map R1. In order to improve positioning accuracy of the robot, a user sets a preferable traversal area of the robot P in the historical map R0, and the user can manually set the rectangular frame S2 in the relatively large historical map R0 on a screen of a mobile terminal and set a limit frame completely positioned in the historical map R0, where since the rectangular frame S2 is completely positioned in the historical map R0, the rectangular frame S2 is used as the overlap area for developing the working start point of the robot. Then a center point 02 of an area covered by the rectangular frame S2 in the coordinate system YOX is determined as the working start point of the robot in the limit frame. The robot P primarily traverses the rectangular frame S2 defined in the historical map R0, and then the robot traverses the working area according to information of the historical map, such that positioning accuracy of the robot is improved, and the situation that the robot travels out of the limit frame due to erroneous determination is prevented. It is worth noting that when the mobile terminal detects an operation instruction of setting the limit frame, the mobile terminal is first controlled to transmit map coordinate information of the limit frame included in the operation instruction to the robot, and after the mobile terminal receives a response confirmation signal from the robot, a touch control signal (corresponding to the limit frame set by the user in a touch manner on the display screen of the mobile terminal) formed on the screen of the mobile terminal is converted into the rectangular frame S1 to be displayed in a map shown on the screen, which can be understood that the rectangular frame S2 is displayed in the coordinate system YOX and positioned in the current map R1.

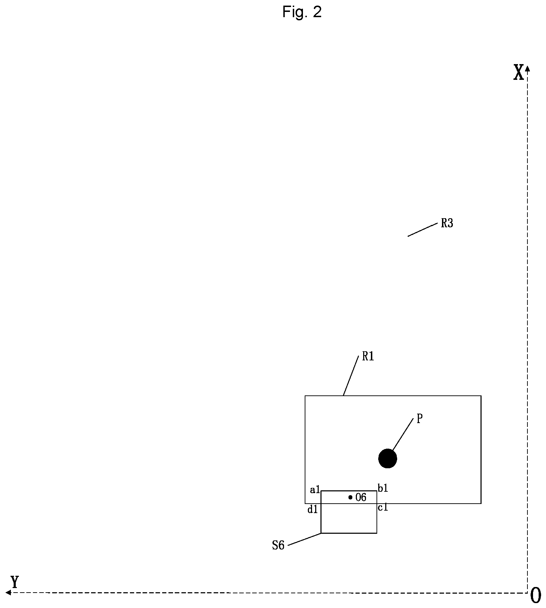

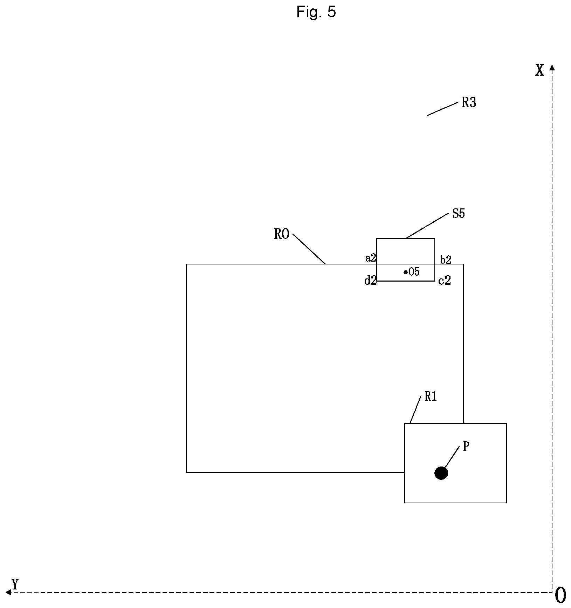

The steps of selecting, selecting, according to the overlap relation between the map area framed by the limit frame and the map constructed by the robot, the overlap area for developing the working start point of the robot, and determining the center point of the overlap area which is selected as the working start point in the limit frame of the robot include: judging, in a case that the limit frame spans at least two different map areas in the map constructed by the robot, whether a current map exists in an overlap area framed by the limit frame, if the current map exists in the overlap area framed by the limit frame, selecting an area framed by the limit frame in the current map as the overlap area for developing the working start point of the robot, and determining the center point of the overlap area which is selected as the working start point in the limit frame of the robot, specifically, according to distributions of the limit frame in various types of maps constructed by the robot, embodiments corresponding to Fig. 2, Fig. 7, Fig. 8 are provided; and if the current map doesn't exist in the overlap area framed by the limit frame, selecting and extracting an area framed by the limit frame in a historical map as the overlap area for developing the working start point of the robot, and determining the center point of the overlap area which is selected as the working start point in the limit frame of the robot, specifically with reference to Fig. 5.

Fig. 2 is a schematic distribution diagram, on the premise of not calling and displaying a historical map, in a case that one part of a rectangular frame S6 is positioned in an untraversed area R3, and the other part of the rectangular frame S6 is positioned in a current map R1. In a pre-configured map coordinate area, that is, in a global coordinate system YOX corresponding to Fig. 2, a robot P matches, at a current position, currently collected environmental characteristic information with pre-stored environmental characteristic information. The robot in the embodiment detects, by means of a visual technical means, that collected environmental image characteristic points do not match environmental characteristic information in a pre-stored image library of the robot. Thus, it is determined that the robot is in a new environment, and does not need to read historical map information from a nonvolatile memory and only constructs the current map R1 in real time, and the robot displays the current map R1 on a screen interface of a mobile terminal. Then, a user can manually set the rectangular frame S6 on a screen of a mobile terminal according to actual requirements, and set a limit frame spanning at least two different map areas in the map constructed by the robot, that is, the rectangular frame S6, where one part a1b1c1d1 of the rectangular frame S6 is framed in the current map R1, and the other part of the rectangular frame S6 is framed in the untraversed area R3. As shown in Fig. 2, the area a1b1c1d1 framed by the rectangular frame S6 in the current map is selected as the overlap area for developing the working start point of the robot, a center point 06 of an area covered by the area a1b1c1d1 in the coordinate system YOX is determined as the working start point of the robot in the limit frame. In the embodiment, the area a1b1c1d1 framed by the limit frame S6 in the current map R1 is preferably selected as the overlap area for developing the working start point of the robot, such that the robot works at a determined map coordinate position from the beginning in the limit frame S6, and the robot is not easy to travel out of boundaries of the limit frame S6 when moving along a planned path from the working start point 06. Therefore, compared with a method for framing limit frames in some unknown map environments, the embodiment has the effects that accuracy of a determined working start point is improved, and a robot is more easily adapted to a current map environment and a physical environment in which the robot actually travels. It is worth noting that when the mobile terminal detects an operation instruction of setting the limit frame, the mobile terminal is first controlled to transmit map coordinate information of the limit frame included in the operation instruction to the robot, and after the mobile terminal receives a response confirmation signal from the robot, a touch control signal (corresponding to the limit frame set by the user in a touch manner on the display screen of the mobile terminal) formed on the screen of the mobile terminal is converted into the rectangular frame S6 to be displayed in a map shown on the screen, which can be understood that the rectangular frame S6 is displayed in the coordinate system YOX, the one part of the rectangular frame S6 is positioned in the untraversed area R3, and the other part of the rectangular frame S6 is positioned in the current map R1.

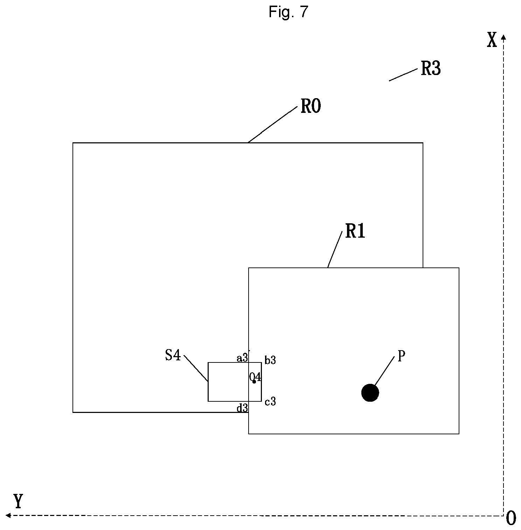

Fig. 7 is a schematic distribution diagram, on the premise of calling and displaying a historical map R0, in a case that one part of a rectangular frame S4 is positioned in the historical map R0, and the other part of the rectangular frame S4 is positioned in a current map R1. In a pre-configured map coordinate area, that is, in a global coordinate system YOX corresponding to Fig. 7, a robot P matches, at a current position, currently collected environmental characteristic information with pre-stored environmental characteristic information. The robot in the embodiment detects, by means of a visual technical means, that collected environmental image characteristic points match environmental characteristic information in a pre-stored image library of the robot. Thus, it is determined that the robot can read out historical map information from a nonvolatile memory in a traversed environment and then sends the historical map R0 to a cloud server by means of WIFI, and the mobile terminal obtains the historical map R0 from the cloud server and displays the historical map R0 on a screen interface of the mobile terminal, such that the historical map R0 is read into a pre-configured map coordinate area. At the same time, the current map R1 constructed by the robot P is also displayed on the screen interface of the mobile terminal. The current map R1 constructed by the robot P in Fig. 7 and the read historical map both have relatively large areas. In order to ensure that movement and positioning of the robot are more adapted to current map environment characteristics, a user sets the rectangular frame S4 spanning the current map R1 and the historical map R0 as a preferable traversal area of the robot P, that is, the user manually sets the rectangular frame S4 on the screen interface of the mobile terminal, where one part a3b3c3d3 of the rectangular frame S4 is framed in the current map R1, and the other part of the rectangular frame S4 is framed in the historical map R0. As shown in Fig. 7, it is determined that the area a3b3c3d3 framed by the rectangular frame S4 in the current map is selected as the overlap area for developing the working start point of the robot, and then a center point 04 of an area covered by the area a3b3c3d3 in the coordinate system YOX is determined as the working start point of the robot in the limit frame. In the embodiment, the area a3b3c3d3 framed by the limit frame S4 in the current map R1 is preferably selected as the overlap area for developing the working start point of the robot, such that the robot works at a determined map coordinate position at the beginning in the limit frame S4, and the robot is not easy to travel out of boundaries of the limit frame S4 when moving along a planned path from the working start point 04. Therefore, compared with a method for defining limit frames in some unknown map environments, the embodiment has the effects that accuracy of a determined working start point is improved, and a robot is more easily adapted to a current map environment and a physical environment in which the robot actually travels. It is worth noting that when the mobile terminal detects an operation instruction of setting the limit frame, the mobile terminal is first controlled to transmit map coordinate information of the limit frame included in the operation instruction to the robot, and after the mobile terminal receives a response confirmation signal from the robot, a touch control signal (corresponding to the limit frame set by the user in a touch manner on the display screen of the mobile terminal) formed on the screen of the mobile terminal is converted into the rectangular frame S4 to be displayed in a map shown on the screen, which can be understood that the rectangular frame S4 is displayed in the coordinate system YOX, one part of the rectangular frame S4 is positioned in the historical map R0, and the other part of the rectangular frame S4 is positioned in the current map R1.

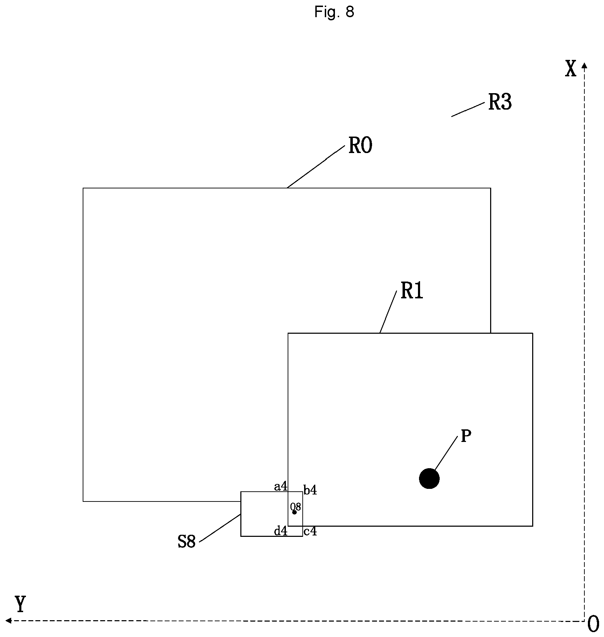

Fig. 8 is a schematic distribution diagram, on the premise of calling and displaying a historical map, in a case that a first part of a rectangular frame S8 is positioned in the historical map R0, a second part of the rectangular frame S8 is positioned in a current map R1, and the other part of the rectangular frame S8 is positioned in an untraversed area R3, and the first part is different from the second part. In a pre-configured map coordinate area, that is, in a global coordinate system YOX corresponding to Fig. 8, a robot P matches, at a current position, currently collected environmental characteristic information with pre-stored environmental characteristic information. The robot in the embodiment detects, by means of a visual technical means, that collected environmental image characteristic points match environmental characteristic information in a pre-stored image library of the robot. Thus, it is determined that the robot can read out historical map information from a nonvolatile memory in a traversed environment and then sends the historical map R0 to a cloud server by means of WIFI, and the mobile terminal obtains the historical map R0 from the cloud server and displays the historical map R0 on a screen interface of the mobile terminal, such that the historical map R0 is read into a pre-configured map coordinate area. At the same time, the current map R1 constructed by the robot P is also displayed on the screen interface of the mobile terminal. In order to ensure that movement and positioning of the robot are more adapted to current map environment characteristics and enable a working area of the robot to cover various map environments, a user sets the rectangular frame S4 spanning the current map R1 and the historical map R0 as a preferable traversal area of the robot P, that is, the user manually sets the rectangular frame S8 on a screen interface of the mobile terminal, where the second part a4b4c4d4 of the rectangular frame S8 is framed in the current map R1, the first part of the rectangular frame S8 is framed in the historical map R0, and the other part of the rectangular frame S8 is framed in the untraversed area R3. As shown in Fig. 8, it is defined that the area a4b4c4d4 framed by the rectangular frame S8 in the current map is selected as the overlap area for developing the working start point of the robot, and then a center point 08 of an area covered by the area a4b4c4d4 in the coordinate system YOX is determined as the working start point of the robot in the limit frame. In the embodiment, the area a4b4c4d4 framed by the rectangular frame S8 in the current map R1 is primarily selected as the overlap area for developing the working start point of the robot, such that the robot works at the determined map coordinate position at the beginning in the rectangular frame S8, and the robot is not easy to travel out of boundaries of the limit frame S8 when moving along a planned path from the working start point 08. Therefore, working subareas of the robot are optimized, the robot is prevented from crossing different environments back and forth, and traversal efficiency and map environment adaptability of the robot are effectively improved. It is worth noting that when the mobile terminal detects an operation instruction of setting the limit frame, the mobile terminal is first controlled to transmit map coordinate information of the limit frame included in the operation instruction to the robot, and after the mobile terminal receives a response confirmation signal from the robot, a touch control signal (corresponding to the limit frame set by the user in a touch manner on the display screen of the mobile terminal) formed on the screen of the mobile terminal is converted into the rectangular frame S8 to be displayed in a map shown on the screen, which can be understood that the rectangular frame S8 is displayed in the coordinate system YOX, where the first part of the rectangular frame S8 is positioned in the historical map R0, the second part of the rectangular frame S8 is positioned in the current map R1, and the other part of the rectangular frame S8 is positioned in the untraversed area R3.

Fig. 5 is a schematic distribution diagram, on the premise of calling and displaying a historical map, in a case that one part of a rectangular frame S5 is positioned in an untraversed area R3 and the other part of the rectangular frame S5 is positioned in a historical map R0. In a pre-configured map coordinate area, that is, in a global coordinate system YOX corresponding to Fig. 5, a robot P matches, at a current position, currently collected environmental characteristic information with pre-stored environmental characteristic information. The robot in the embodiment detects, by means of a visual technical means, that collected environmental image characteristic points match environmental characteristic information in a pre-stored image library of the robot. Thus, it is determined that the robot can read out historical map information from a nonvolatile memory in a traversed environment and then sends the historical map R0 to a cloud server by means of WIFI, and the mobile terminal obtains the historical map R0 from the cloud server and displays the historical map R0 on a screen interface of the mobile terminal, such that the historical map R0 is read into a pre-configured map coordinate area. At the same time, the current map R1 constructed by the robot P is also displayed on the screen interface of the mobile terminal. The current map R1 constructed by the robot P in Fig. 8 has a coverage area far less than that of the read historical map R0, and the historical map R0 dominates influence factors for subsequent movement positioning of the robot such that the user can manually set a limit frame spanning the untraversed area R3 and the historical map R0 on a screen interface of the mobile terminal according to actual requirements, that is, the rectangular frame S5. In Fig. 5, one part a2b2c2d2 of the rectangular frame S5 is framed in the historical map R0, and the other part of the rectangular frame S5 is framed in the untraversed area R3. As shown in Fig. 5, the area a2b2c2d2 framed by the rectangular frame S5 in the current map is determined as the overlap area for developing the working start point of the robot, and a center point 05 of an area covered by the area a2b2c2d2 in the coordinate system YOX is determined as the working start point of the robot in the limit frame. In the embodiment, the area a2b2c2d2 framed by the limit frame S5 in the historical map R0 is primarily selected as the overlap area for developing the working start point of the robot, such that the robot works at a determined map coordinate position at the beginning in the limit frame S5, and the robot is not easy to travel out of boundaries of the limit frame S5 when moving along a planned path from the working start point 05. Therefore, accuracy of a determined working start point is improved, and the robot is more easily adapted to a current map environment and a physical environment in which the robot actually travels. It is worth noting that when the mobile terminal detects an operation instruction of setting the limit frame, the mobile terminal is first controlled to transmit map coordinate information of the limit frame included in the operation instruction to the robot, and after the mobile terminal receives a response confirmation signal from the robot, a touch control signal (corresponding to the limit frame set by the user in a touch manner on the display screen of the mobile terminal) formed on the screen of the mobile terminal is converted into the rectangular frame S5 to be displayed in a map shown on the screen, which can be understood that the rectangular frame S5 is displayed in the coordinate system YOX, where one part of the rectangular frame S5 is positioned in the untraversed area R3, and the other part of the rectangular frame S5 is positioned in the historical map R0.

On the basis of the above embodiments, a user can use a mobile terminal to set the limit frame in the case of the current map, the historical map or no map, and the area framed by the limit frame in the current map is primarily selected as the overlap area for developing the working start point of the robot, the robot is controlled to select an optimal working start point in the working subareas of various terminal map environments such that accuracy of a determined working start point is improved, and mistaken detection of boundaries of the limit frame by the robot due to the existence of an interference target is prevented. Therefore, blocking effects of virtual rectangular frames set by a user is enhanced in various terminal map environments.

In the embodiments shown in Figs. 1-8, the limit frame is preferably set as a rectangular frame. The map information of the rectangular frame received by the robot includes coordinates (x1, y1) of an upper-left corner and coordinates (x4, y4) of a lower-right corner of the rectangular frame. After the robot receives coordinate information of the rectangular frame, a position corresponding to the rectangular frame is defined on the map constructed by the robot according to the coordinate information, and virtual boundaries framing the rectangular frame are determined. That is, coordinates of four corners of the rectangular frame can be determined as (x1, y1),(xl, y4),(x4, y1) and (x4, y4) respectively only by means of the coordinates (x1, y1) of the upper-left corner and the coordinates (x4, y4) of the lower-right corner of the rectangular frame, and further it is determined that the rectangular frame has a length of |x1-x4| and a width of |y1-y4|, and coordinates of a center point of the rectangular frame are ((x1+x4)/2, (yl+y4)/2). Then scenes are set according to the limit frame corresponding to the embodiments shown in Figs. 1-8, the overlap area of the map area framed by the rectangular frame and the map constructed by the robot are determined, and similarly, coordinates of the center point of the overlap area can be computed by the above coordinate information. Since the limit frame is set as the rectangular frame, computational complexity of virtual boundary coordinates of the rectangular frame can be simplified, and the coordinate information of the working start point can be quickly determined.

In the embodiments shown in Figs. 1-8, the current map R1 is displayed above the historical map R0 on a screen of a mobile terminal. Since the robot P calls out the historical map R0 of one position and constructs the current map R1 matching an actual situation of the position, the historical map R0 and the current map R1 certainly have map areas representing the same environmental characteristics, that is, there certainly is an overlap area between the historical map R0 and the current map R1 (in the global coordinate system YOX) on the same pre-configured map coordinate area, where the current map R1 partially or completely overlaps the historical map R0, and the current map R1 and the historical map R0 partially or completely cover the untraversed area R3. In the embodiment, the current map R1 is always displayed above the historical map R0, such that the map information displayed on the screen of the mobile terminal reflects a change condition of an actual physical environment in time, and a user can conveniently frame an effective working area and select a proper working start point according to the map information.

In the above embodiments, the step of recognizing an environment by the robot includes: matching environmental characteristic information currently collected by the robot with environmental characteristic information which is pre-stored; judging, in a case that matching succeeds, that the environmental characteristic information currently collected belongs to environmental characteristic information in the historical map, reading the historical map into the pre-configured map coordinate area, and constructing the current map to cover the historical map; and judging, in a case that matching fails, the environmental characteristic information currently collected belongs to brand-new environmental characteristic information, and directly constructing the current map in the pre-configured map coordinate area; and an area not covered with the historical map and the current map in the pre-configured map coordinate area is determined as the untraversed area, and the pre-configured map coordinate area is set on the screen of the mobile terminal. By the current map to cover the historical map, map errors caused by slipping or collision of the robot with an obstacle can be corrected, such that conditions are created for accurately limiting the movement working area of the robot later.

An embodiment of the disclosure further provides a method for controlling movement of a robot. The method includes: computing, after a working starting point is determined through the method for determining the working start point, coordinates of the working start point, so as to control the robot to move from a current position to the working start point according to the above generated map information, and a navigation path is a result of iterative search evaluation of the map information on the basis of an A* algorithm; controlling the robot to traverse a corresponding area in one direction of the working start point according to a planned path, and controlling the robot to return to the working start point to continue to traverse a corresponding area in an opposite direction according to a planned path of the same type; and the planned path used in this step is random traveling, spiral traveling and fixed subarea (such as 4 m * 4 m) traveling; and controlling the robot to travel along boundaries of a limit frame. According to the embodiment, the robot is controlled to not step out of the limit frame after moving from the working start point until a working area corresponding to the limit frame is traversed, such that a traversal coverage rate of the robot in the limit frame is improved. Moreover, according to the overlap relation between the map area framed by the limit frame and the map constructed by the robot, the working start point of the robot in a limited working area is selected, a working area range of the robot is well changed according to environmental characteristics, and the situation that the robot steps out of virtual boundaries of the limit frame due to environmental factors is prevented.

On the basis of the above embodiments, the method for controlling movement further includes: setting a pre-judgment area surrounding each boundary enclosing the movement limit frame, any one of the pre-judgment area is an area where part of the area is within the movement limit frame and the other part of area is outside the movement limit frame; judging, when it is detected that the robot enters the pre-judgment area in a process that the robot traverses the limit frame, whether a current direction of the robot faces one boundary of the limit frame and whether a straight-line distance between the robot and a reference point is greater than or equal to a straight-line distance between the reference point and a center point of the boundary, if the current direction of the robot faces the boundary of the limit frame and the straight-line distance between the robot and the reference point is greater than or equal to the straight-line distance between the reference point and the center point of the boundary, adjusting a movement direction of the robot to be opposite the current direction of the robot, and controlling the robot to continue to move according to the planned path or to keep traveling along the boundaries; and if the current direction of the robot doesn't face the boundary of the limit frame, or if the straight-line distance between the robot and the reference point is less than the straight-line distance between the reference point and the center point of the boundary, controlling the robot to travel according to the planned path or to keep traveling along the boundaries; and the reference point is a coordinate point, the coordinate point and the robot are positioned on a same side of the boundary of the limit frame, and a vertical distance between the coordinate point and the center point of the boundary of the limit frame equals a preset length.

According to the embodiment, the pre-judgment area surrounds each of the boundary of the limit frame, and the reference point is set on a same side of a position where the robot travels, such that whether the robot travels to the boundary of the limit frame along the planned path or along the boundary can be accurately judged, an optimal control effect of distance between the robot and the boundary of the limit frame is ensured, and the robot is prevented from traveling out of the limit frame.

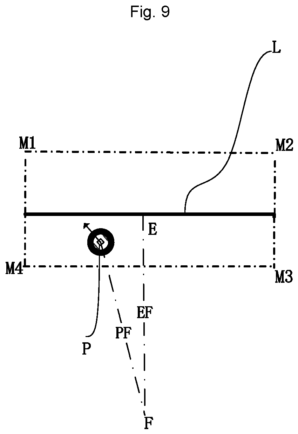

Specifically, as shown in Fig. 9, the thickest black line represents a boundary L of the limit frame, and a point E is a center point of the boundary L of the limit frame. A rectangular area indicated by M1M2M3M4 represents a pre-determination area. A position point indicated by F is a reference point, and both the robot P and the reference point F are positioned on a right side of the boundary L of the limit frame. Now the robot P is positioned in the pre-judgment area M1M2M3M4 and advances towards the boundary L of the limit frame in a direction of an arrow, and the robot P judges whether a distance PF between the robot and the reference point F is greater than or equal to a distance EF between the point E to the reference point F when advancing. When PF ≥ EF, it is determined that the robot P collides the boundary L of the limit frame. When PF is smaller than EF, it is determined that the robot P does not collide with the boundary L of the limit frame. As shown in Fig 9, if the robot P adjusts an advancing direction and travels in a direction away from the boundary L of the limit frame indicated by an arrow, and meanwhile, the straight-line distance between the robot P and the reference point F is kept smaller than the straight-line distance between the reference point and the center point E of the boundary L, the robot continues to move along the planned path or to keep traveling along the boundary, and the robot P can not collide with the boundary L of the limit frame.

It is worth noting that the boundary L is any one of virtual boundaries framing the limit frame, and when the robot P travels towards any one of the virtual boundaries of the limit frame, it is further detected that the straight-line distance between the robot P and the reference point F is greater than or equal to the straight-line distance between the reference point F and the center point of any one of the virtual boundaries L of the limit frame, it is indicated that the robot P travels to the position where the corresponding virtual boundary L of the limit frame is positioned, and enters the pre-judgment area and collides with the virtual boundary L, at this time, the robot needs to immediately stop advancing, turns a direction and gets away, so as to be prevented from crossing the virtual boundary L and traveling out of the limit frame. When the robot travels towards the virtual boundary L, it is further detected that the straight-line distance between the robot P and the reference point F is still smaller than the straight-line distance between the reference point F and the center point E of the virtual boundary L, then it is indicated that the robot P has a certain distance from the virtual boundary L and does not enter the pre-judgment area and does not collide with the virtual boundary L, and the robot can continue to move according to the planned path or to keep traveling along the boundary until the robot enters the pre-judgment area again to collide with the virtual boundary L. Therefore, an optimal control effect of a distance between the robot and the boundary of the limit frame is ensured, and the robot is prevented from traveling out of the limit frame.

On the basis of the above embodiments, the method for controlling movement further includes: judging whether the robot traverses a map area framed by the limit frame currently; selecting, after it is determined that the robot traverses the map area framed by the limit frame currently, one limit frame which is closest to the working start point of the limit frame currently from other limit frames, and determining the limit frame which is selected as a next target limit frame; and controlling the robot to cross one boundary of the limit frame to move to a working start point of the next target limit frame; and more than one limiting frame is set on the map constructed by the robot. In the embodiment, the map area framed by the limit frame is not a fixed defined area, a user determines a plurality of target working areas by self-defining a plurality of limit frames, and controls the robot to sequentially traverse the working areas by determining corresponding working start points, such that the user can configure determination strategies of the target working areas according to actual requirements, optimal working subareas are achieved, and the robot can be better adapted to different map environments.

The above embodiments are merely intended for describing the technical solutions of the disclosure rather than limiting the disclosure. Although the disclosure is described in detail with reference to the above embodiments, a person of ordinary skill in the art should understand that they can still make modifications to the technical solutions described in the embodiments or equivalent substitutions to some or all of the technical features of the technical solutions. These modifications or substitutions do not enable the corresponding technical solutions to depart from the scope of the technical solutions in all the embodiments of the disclosure.

## Claims

1. A method for determining a working start point comprised in a movement limit frame of a robot (P), comprising:
setting a movement limit frame in a map constructed by the robot (P); and
selecting, according to an overlap relation between a map area framed by the movement limit frame and the map constructed by the robot (P), an overlap area for developing a working start point of the robot (P), and determining a center point of the overlap area which is selected as the working start point in the movement limit frame of the robot (P);
wherein the movement limit frame encloses an area for limiting a working range of the robot (P),
wherein selecting, according to the overlap relation between the map area framed by the movement limit frame and the map constructed by the robot (P), the overlap area for developing the working start point of the robot (P), and determining the center point of the overlap area which is selected as the working start point in the movement limit frame of the robot (P) comprise:
selecting, in a case that the movement limit frame is completely set in any one of map areas in the map constructed by the robot (P) and does not span different map areas, an area covered with the movement limit frame as the overlap area for developing the working start point of the robot (P), and determining the center point of the area covered with the movement limit frame as the working start point in the movement limit frame of the robot (P);
wherein the map constructed by the robot (P) comprises: a current map constructed by the robot (P) in an unrecognized environment, a historical map matching a recognized environment, and an untraversed area (R3) not covered with the historical map (R2) and the current map (R1),
or wherein selecting, according to the overlap relation between the map area framed by the movement limit frame and the map constructed by the robot (P), the overlap area for developing the working start point of the robot (P), and determining the center point of the overlap area which is selected as the working start point in the movement limit frame of the robot (P) comprise:
judging, in a case that the movement limit frame spans at least two different map areas in the map constructed by the robot (P), whether a current map (R1) exists in an overlap area framed by the movement limit frame, if the current map (R1) exists in the overlap area framed by the movement limit frame, selecting an area framed by the movement limit frame in the current map (R1) as the overlap area for developing the working start point of the robot (P), and determining the center point of the overlap area which is selected as the working start point in the movement limit frame of the robot (P); and if the current map (R1) doesn't exist in the overlap area framed by the movement limit frame, selecting and extracting an area framed by the movement limit frame in a historical map as the overlap area for developing the working start point of the robot (P), and determining the center point of the overlap area which is selected as the working start point in the movement limit frame of the robot (P);
wherein the map constructed by the robot (P) comprises: the current map (R1) constructed by the robot (P) in an unrecognized environment, the historical map (R2) matching a recognized environment, and an untraversed area (R3) not covered with the historical map (R2) and the current map (R1).

2. The method for determining the working start point according to claim 1, wherein setting the movement limit frame on the map constructed by the robot (P) comprises:
displaying, after a mobile terminal receives map information constructed by the robot (P), the map information in a pre-configured map coordinate area on a screen of the mobile terminal, wherein the pre-configured map coordinate area is a global grid map area;
controlling, when the mobile terminal detects an operation instruction of setting the movement limit frame, the mobile terminal to transmit map coordinate information of the movement limit frame included in the operation instruction to the robot (P); and
converting, after a response confirmation signal from the robot (P) is received, a touch control signal formed on the screen into the movement limit frame and displaying the movement limit frame in the map shown on the screen.

3. The method for determining the working start point according to claim 2, wherein on the screen of the mobile terminal, the current map (R1) is displayed above the historical map (R2), the current map (R1) and the historical map (R2) partially or completely overlap, and the current map (R1) and the historical map (R2) partially or completely cover the untraversed area (R3).

4. The method for determining the working start point according to claim 3, wherein recognizing an environment by the robot (P) comprises:
matching environmental characteristic information currently collected by the robot (P) with environmental characteristic information which is pre-stored;
judging, in a case that matching succeeds, that the environmental characteristic information currently collected belongs to environmental characteristic information in the historical map (R2), reading the historical map (R2) into the pre-configured map coordinate area, and constructing the current map (R1) to cover the historical map (R2);
and judging, in a case that matching fails, the environmental characteristic information currently collected belongs to brand-new environmental characteristic information, and directly constructing the current map (R1) in the pre-configured map coordinate area; wherein an area not covered with the historical map (R2) and the current map (R1) in the pre-configured map coordinate area is determined as the untraversed area (R3), and the pre-configured map coordinate area is set on the screen of the mobile terminal.

5. The method for determining the working start point according to claim 2, wherein the movement limit frame is set as a rectangular frame, and the map information of the rectangular frame received by the robot (P) comprises coordinates of an upper-left corner and coordinates of a lower-right corner of the rectangular frame; and
after the robot (P) receives coordinate information of the rectangular frame, a corresponding rectangular frame is framed, according to the coordinate information, on the map constructed by the robot (P), virtual boundaries enclosing the rectangular frame are determined, and further the overlap area of the map area framed by the rectangular frame and the map constructed by the robot (P) is determined.

6. A method for controlling movement of a robot (P), comprising: controlling, after a working start point is determined through the method for determining the working start point according to any one of claims 1-5, the robot (P) to move from a current position to the working start point;
controlling, according to a planned path, the robot (P) to traverse a corresponding area in one direction starting from the working start point, and controlling the robot (P) to return to the working start point to continue to traverse a corresponding area in an opposite direction according to the planned path of a same type; and
controlling the robot (P) to travel along boundaries of the movement limit frame.

7. The method for controlling movement according to claim 6, further comprising:
setting a pre-judgment area surrounding each boundary enclosing the movement limit frame, any one of the pre-judgment area is an area where part of the area is within the movement limit frame and the other part of area is outside the movement limit frame;
judging, when it is detected that the robot (P) enters the pre-judgment area in a process that the robot (P) traverses the movement limit frame, whether a current direction of the robot faces one boundary of the movement limit frame and whether a straight-line distance between the robot (P) and a reference point is greater than or equal to a straight-line distance between the reference point and a center point of the boundary, if the current direction of the robot faces the boundary of the movement limit frame and the straight-line distance between the robot (P) and the reference point is greater than or equal to the straight-line distance between the reference point and the center point of the boundary, adjusting a movement direction of the robot (P) to be opposite the current direction of the robot (P), and controlling the robot (P) to continue to move according to the planned path or to keep traveling along the boundaries; and if the current direction of the robot (P) doesn't face the boundary of the movement limit frame, or if the straight-line distance between the robot (P) and the reference point is less than the straight-line distance between the reference point and the center point of the boundary, controlling the robot (P) to travel according to the planned path or to keep traveling along the boundaries;
wherein the reference point is a coordinate point, the coordinate point and the robot (P) are positioned on a same side of the boundary of the movement limit frame, and a vertical distance between the coordinate point and the center point of the boundary of the movement limit frame equals a preset length.

8. The method for controlling movement according to claim 6, the method further comprising:
judging whether the robot (P) traverses a map area framed by the movement limit frame currently;
selecting, after it is determined that the robot (P) traverses the map area framed by the movement limit frame currently, one limit frame which is closest to the working start point of the movement limit frame currently from other limit frames, and determining the movement limit frame which is selected as a next target limit frame; and
controlling the robot (P) to cross one boundary of the movement limit frame to move to a working start point of the next target limit frame;
wherein more than one limiting frame is set on the map constructed by the robot (P).

## Patentansprüche

1. Verfahren zur Bestimmung eines Arbeitsstartpunkts, der in einem Bewegungsbegrenzungsrahmen eines Roboters (P) enthalten ist, umfassend:
Einstellen eines Bewegungsbegrenzungsrahmens in einer vom Roboter (P) erstellten Karte; und
Auswählen, gemäß einer Überlappungsbeziehung zwischen einem vom Bewegungsbegrenzungsrahmen eingerahmten Kartenbereich und der vom Roboter (P) erstellten Karte, eines Überlappungsbereichs zum Entwickeln eines Arbeitsstartpunkts des Roboters (P) und Bestimmen eines Mittelpunkts des Überlappungsbereichs, der als Arbeitsstartpunkt im Bewegungsbegrenzungsrahmen des Roboters (P) ausgewählt wird;
wobei der Bewegungsbegrenzungsrahmen einen Bereich zum Begrenzen einer Reichweite des Roboters (P) umschließt, wobei das Auswählen, gemäß der Überlappungsbeziehung zwischen dem vom Bewegungsbegrenzungsrahmen eingerahmten Kartenbereich und der vom Roboter (P) erstellten Karte, des Überlappungsbereichs zum Entwickeln des Arbeitsstartpunkts des Roboters (P) und Bestimmen des Mittelpunkts des Überlappungsbereichs, der als Arbeitsstartpunkt im Bewegungsbegrenzungsrahmen des Roboters (P) ausgewählt wird, umfasst:
Auswählen, bei einem Fall, in dem der Bewegungsbegrenzungsrahmen vollständig in einem beliebigen der Kartenbereiche in der vom Roboter (P) erstellten Karte eingestellt ist und nicht verschiedene Kartenbereiche überspannt, eines mit dem Bewegungsbegrenzungsrahmen abgedeckten Bereichs als Überlappungsbereich zum Entwickeln des Arbeitsstartpunkts des Roboters (P) und Bestimmen des Mittelpunkts des mit dem Bewegungsbegrenzungsrahmen abgedeckten Bereichs als Arbeitsstartpunkt in dem Bewegungsbegrenzungsrahmen des Roboters (P);
wobei die vom Roboter (P) erstellte Karte Folgendes umfasst: eine aktuelle Karte, die vom Roboter (P) in einer nicht erkannten Umgebung erstellt wurde, eine historische Karte, die eine erkannte Umgebung abgleicht, und einen nicht durchquerten Bereich (R3), der nicht von der historischen Karte (R2) und der aktuellen Karte (R1) abgedeckt ist,
oder wobei das Auswählen, gemäß der Überlappungsbeziehung zwischen dem vom Bewegungsbegrenzungsrahmen eingerahmten Kartenbereich und der vom Roboter (P) erstellten Karte, des Überlappungsbereichs zum Entwickeln des Arbeitsstartpunkts des Roboters (P) und das Bestimmen des Mittelpunkts des Überlappungsbereichs, der als Arbeitsstartpunkt im Bewegungsbegrenzungsrahmen des Roboters (P) ausgewählt wird, Folgendes umfasst:
Beurteilen bei einem Fall, in dem der Bewegungsbegrenzungsrahmen mindestens zwei verschiedene Kartenbereiche in der vom Roboter (P) erstellten Karte überspannt, ob eine aktuelle Karte (R1) in einem vom Bewegungsbegrenzungsrahmen eingerahmten Überlappungsbereich vorliegt, wenn die aktuelle Karte (R1) in dem vom Bewegungsbegrenzungsrahmen eingerahmten Überlappungsbereich vorliegt, Auswählen eines vom Bewegungsbegrenzungsrahmen eingerahmten Bereichs in der aktuellen Karte (R1) als Überlappungsbereich zum Entwickeln des Arbeitsstartpunkts des Roboters (P) und Bestimmen des Mittelpunkts des Überlappungsbereichs, der als Arbeitsstartpunkt im Bewegungsbegrenzungsrahmen des Roboters (P) ausgewählt wird; und wenn die aktuelle Karte (R1) in dem vom Bewegungsbegrenzungsrahmen eingerahmten Überlappungsbereich nicht vorliegt, Auswählen und Extrahieren eines vom Bewegungsbegrenzungsrahmen eingerahmten Bereichs in einer historischen Karte als Überlappungsbereich zum Entwickeln des Arbeitsstartpunkts des Roboters (P) und Bestimmen des Mittelpunkts des Überlappungsbereichs, der als Arbeitsstartpunkt im Bewegungsbegrenzungsrahmen des Roboters (P) ausgewählt wird;
wobei die vom Roboter (P) erstellte Karte Folgendes umfasst: die aktuelle Karte (R1), die vom Roboter (P) in einer nicht erkannten Umgebung erstellt wurde, die historische Karte (R2), die eine erkannte Umgebung abgleicht, und einen nicht durchquerten Bereich (R3), der nicht von der historischen Karte (R2) und der aktuellen Karte (R1) abgedeckt ist.

2. Verfahren zur Bestimmung des Arbeitsstartpunkts nach Anspruch 1, wobei das Einstellen des Bewegungsbegrenzungsrahmens auf der vom Roboter (P) erstellten Karte Folgendes umfasst:
Anzeigen, nachdem ein mobiles Endgerät vom Roboter (P) erstellte Karteninformationen empfangen hat, der Karteninformationen in einem vorkonfigurierten Kartenkoordinatenbereich auf einem Bildschirm des mobilen Endgeräts, wobei der vorkonfigurierte Kartenkoordinatenbereich ein globaler Gitterkartenbereich ist;
Steuern, wenn das mobile Endgerät eine Betriebsanweisung zum Einstellen des Bewegungsbegrenzungsrahmens detektiert, des mobilen Endgeräts, um Kartenkoordinateninformationen des Bewegungsbegrenzungsrahmens, die in der Betriebsanweisung enthalten sind, an den Roboter (P) zu übertragen; und
Umwandeln, nachdem ein Antwortbestätigungssignal von dem Roboter (P) empfangen wurde, eines Berührungssteuersignals, das auf dem Bildschirm gebildet wurde, in den Bewegungsbegrenzungsrahmen und Anzeigen des Bewegungsbegrenzungsrahmens in der auf dem Bildschirm gezeigten Karte.

3. Verfahren zur Bestimmung des Arbeitsstartpunkts nach Anspruch 2, wobei auf dem Bildschirm des mobilen Endgeräts die aktuelle Karte (R1) über der historischen Karte (R2) angezeigt wird, die aktuelle Karte (R1) und die historische Karte (R2) sich teilweise oder vollständig überlappen und die aktuelle Karte (R1) und die historische Karte (R2) den nicht durchquerten Bereich (R3) teilweise oder vollständig abdecken.

4. Verfahren zur Bestimmung des Arbeitsstartpunkts nach Anspruch 3, wobei das Erkennen einer Umgebung durch den Roboter (P) Folgendes umfasst:
Abgleichen von Umgebungsmerkmalinformationen, die derzeit vom Roboter (P) gesammelt werden, mit vorab gespeicherten Umgebungsmerkmalinformationen;
Beurteilen, bei einem Fall, in dem der Abgleich erfolgreich ist, dass die derzeit gesammelten Umgebungsmerkmalinformationen zu Umgebungsmerkmalinformationen in der historischen Karte (R2) gehören, Lesen der historischen Karte (R2) in den vorkonfigurierten Kartenkoordinatenbereich und Erstellen der aktuellen Karte (R1), um die historische Karte (R2) abzudecken;
und Beurteilen bei einem Fall, in dem der Abgleich fehlschlägt, dass die derzeit gesammelten Umgebungsmerkmalinformationen zu brandneuen Umgebungsmerkmalinformationen gehören, und direktes Erstellen der aktuellen Karte (R1) in dem vorkonfigurierten Kartenkoordinatenbereich; wobei ein Bereich, der mit der historischen Karte (R2) und der aktuellen Karte (R1) in dem vorkonfigurierten Kartenkoordinatenbereich nicht abgedeckt ist, als der nicht durchquerte Bereich (R3) bestimmt wird und der vorkonfigurierte Kartenkoordinatenbereich auf dem Bildschirm des mobilen Endgeräts eingestellt wird.

5. Verfahren zur Bestimmung des Arbeitsstartpunkts nach Anspruch 2, wobei der Bewegungsbegrenzungsrahmen als ein rechteckiger Rahmen eingestellt ist und die Karteninformationen des rechteckigen Rahmens, die von dem Roboter (P) empfangen werden, Koordinaten einer oberen linken Ecke und Koordinaten einer unteren rechten Ecke des rechteckigen Rahmens umfassen; und
nachdem der Roboter (P) Koordinateninformationen des rechteckigen Rahmens empfangen hat, wird ein entsprechender rechteckiger Rahmen gemäß den Koordinateninformationen auf der Karte, die vom Roboter (P) erstellt wird, eingerahmt, virtuelle Grenzen, die den rechteckigen Rahmen umschließen, bestimmt werden und ferner wird der Überlappungsbereich des Kartenbereichs, der von dem rechteckigen Rahmen und der vom Roboter (P) erstellten Karte eingerahmt wird, bestimmt.

6. Verfahren zur Steuerung der Bewegung eines Roboters (P), umfassend: Steuern, nachdem ein Arbeitsstartpunkt durch das Verfahren zur Bestimmung des Arbeitsstartpunkts nach einem der Ansprüche 1-5 bestimmt wurde, dass sich der Roboter (P) von einer aktuellen Position zu dem Arbeitsstartpunkt bewegt;
Steuern, gemäß eines geplanten Pfades, des Roboters (P), um einen entsprechenden Bereich in einer Richtung beginnend von dem Arbeitsstartpunkt zu durchqueren, und Steuern des Roboters (P), um zu dem Arbeitsstartpunkt zurückzukehren, um einen entsprechenden Bereich in einer entgegengesetzten Richtung gemäß des geplanten Pfades eines gleichen Typs weiter zu durchqueren; und Steuern des Roboters (P), um entlang der Grenzen des Bewegungsbegrenzungsrahmens zu fahren.

7. Verfahren zur Steuerung einer Bewegung nach Anspruch 6, ferner umfassend:
Einstellen eines Vorurteilungsbereichs, der jede Grenze umgibt, die den Bewegungsbegrenzungsrahmen umschließt, wobei einer der Vorurteilungsbereiche ein Bereich ist, in dem sich ein Teil des Bereichs innerhalb des Bewegungsbegrenzungsrahmens befindet und sich der andere Teil des Bereichs außerhalb des Bewegungsbegrenzungsrahmens befindet;
Beurteilen, wenn detektiert wird, dass der Roboter (P) in den Vorbeurteilungsbereich bei einem Prozess eintritt, in dem der Roboter (P) den Bewegungsbegrenzungsrahmen durchquert, ob eine aktuelle Richtung des Roboters einer Grenze des Bewegungsbegrenzungsrahmens zugewandt ist und ob ein geradliniger Abstand zwischen dem Roboter (P) und einem Referenzpunkt größer als oder gleich einem geradlinigen Abstand zwischen dem Referenzpunkt und einem Mittelpunkt der Grenze ist, wenn die aktuelle Richtung des Roboters der Grenze des Bewegungsbegrenzungsrahmens zugewandt ist und der geradlinige Abstand zwischen dem Roboter (P) und dem Referenzpunkt größer als oder gleich dem geradlinigen Abstand zwischen dem Referenzpunkt und dem Mittelpunkt der Grenze ist, Justieren einer Bewegungsrichtung des Roboters (P), damit sie entgegengesetzt zur aktuellen Richtung des Roboters (P) verläuft und Steuern des Roboters (P), damit er sich gemäß des geplanten Pfades weiter bewegt oder mit der Fahrt entlang der Grenzen fortfährt; und wenn die aktuelle Richtung des Roboters (P) der Grenze des Bewegungsbegrenzungsrahmens nicht zugewandt ist, oder wenn der geradlinige Abstand zwischen dem Roboter (P) und dem Referenzpunkt kleiner als der geradlinige Abstand zwischen dem Referenzpunkt und dem Mittelpunkt der Grenze ist, Steuern des Roboters (P), damit er gemäß des geplanten Pfads fährt oder mit der Fahrt entlang der Grenzen fortfährt;
wobei der Referenzpunkt ein Koordinatenpunkt ist, der Koordinatenpunkt und der Roboter (P) auf derselben Seite der Grenze des Bewegungsbegrenzungsrahmens positioniert sind und ein vertikaler Abstand zwischen dem Koordinatenpunkt und dem Mittelpunkt der Grenze des Bewegungsbegrenzungsrahmens gleich einer voreingestellten Länge ist.

8. Verfahren zur Steuerung der Bewegung nach Anspruch 6, wobei das Verfahren ferner Folgendes umfasst:
Beurteilen, ob der Roboter (P) derzeit einen Kartenbereich durchquert, der von dem Bewegungsbegrenzungsrahmen eingerahmt wird;
Auswählen, nachdem bestimmt wird, dass der Roboter (P) den Kartenbereich durchquert, der derzeit von dem Bewegungsbegrenzungsrahmen eingerahmt wird, eines Begrenzungsrahmens, der dem Arbeitsstartpunkt des Bewegungsbegrenzungsrahmens am nächsten liegt, derzeit aus anderen Begrenzungsrahmen, und Bestimmen des Bewegungsbegrenzungsrahmens, der als nachfolgender Zielbegrenzungsrahmen ausgewählt wird; und
Steuern des Roboters (P), um eine Grenze des Bewegungsbegrenzungsrahmens zu überqueren, um sich zu einem Arbeitsstartpunkt des nachfolgenden Zielbegrenzungsrahmens zu bewegen;
wobei mehr als ein Begrenzungsrahmen auf der vom Roboter (P) erstellten Karte eingestellt ist.

## Revendications

1. Procédé de détermination d'un point de départ de travail compris dans les limites d'un domaine de déplacement d'un robot (P), comprenant :
définir les limites d'un domaine de déplacement dans une carte construite par le robot (P) ; et sélectionner, selon une relation de chevauchement entre une zone cartographique encadrée par les limites d'un domaine de déplacement et la carte construite par le robot (P), une zone de chevauchement pour développer un point de départ de travail du robot (P), et déterminer un point central de la zone de chevauchement étant sélectionné comme étant le point de départ de travail dans les limites d'un domaine de déplacement du robot (P) ;
dans lequel les limites d'un domaine de déplacement renferment une zone de limitation de la plage de travail du robot (P),
dans lequel sélectionner, selon la relation de chevauchement entre la zone cartographique encadrée par les limites d'un domaine de déplacement et la carte construite par le robot (P), la zone de chevauchement pour développer le point de départ de travail du robot (P), et déterminer le point central de la zone de chevauchement qui est sélectionnée comme étant le point de départ de travail dans les limites d'un domaine de déplacement du robot (P), comprennent :
sélectionner, dans le cas où les limites d'un domaine de déplacement sont entièrement placées dans l'une quelconque des zones cartographiques dans la carte construite par le robot (P) et ne s'étend pas sur différentes zones cartographiques, une zone couverte par les limites d'un domaine de déplacement en tant que zone de chevauchement pour développer le point de départ de travail du robot (P), et déterminer le point central de la zone couverte par les limites d'un domaine de déplacement en tant que point de départ de travail dans les limites d'un domaine de déplacement du robot (P) ;
dans lequel la carte construite par le robot (P) comprend : une carte actuelle construite par le robot (P) dans un environnement non reconnu, une carte historique correspondant à un environnement reconnu, et une zone non parcourue (R3) non couverte par la carte historique (R2) et la carte actuelle (R1),
ou dans lequel sélectionner, selon la relation de chevauchement entre la zone cartographique encadrée par les limites d'un domaine de déplacement et la carte construite par le robot (P), la zone de chevauchement pour développer le point de départ de travail du robot (P), et déterminer le point central de la zone de chevauchement qui est sélectionné comme étant le point de départ de travail dans les limites d'un domaine de déplacement du robot (P) comprennent :
juger, dans le cas où les limites d'un domaine de déplacement s'étendent sur au moins deux zones cartographiques différentes dans la carte construite par le robot (P), si une carte actuelle (R1) existe dans une zone de chevauchement encadrée par les limites d'un domaine de déplacement, si la carte actuelle (R1) existe dans la zone de chevauchement encadrée par les limites d'un domaine de déplacement, sélectionner une zone encadrée par les limites d'un domaine de déplacement dans la carte actuelle (R1) en tant que zone de chevauchement pour développer le point de départ de travail du robot (P), et déterminer le point central de la zone de chevauchement qui est sélectionnée en tant que point de départ de travail dans les limites d'un domaine de déplacement du robot (P) ; et si la carte actuelle (R1) n'existe pas dans la zone de chevauchement encadrée par les limites d'un domaine de déplacement, sélectionner et extraire une zone encadrée par les limites d'un domaine de déplacement dans une carte historique comme étant la zone de chevauchement pour développer le point de départ de travail du robot (P), et déterminer le point central de la zone de chevauchement qui est sélectionnée comme étant le point de départ de travail dans les limites d'un domaine de déplacement du robot (P) ;
dans lequel la carte construite par le robot (P) comprend : la carte actuelle (R1) construite par le robot (P) dans un environnement non reconnu, la carte historique (R2) correspondant à un environnement reconnu, et une zone non parcourue (R3) non couverte par la carte historique (R2) et la carte actuelle (R1).

2. Procédé de détermination du point de départ de travail selon la revendication 1, dans lequel la définition des limites d'un domaine de déplacement sur la carte construite par le robot (P) comprend :
afficher, après qu'un terminal mobile a reçu des informations cartographiques construites par le robot (P), les informations cartographiques dans une zone de coordonnées cartographiques préconfigurée sur un écran du terminal mobile, dans lequel la zone de coordonnées cartographiques préconfigurée est une zone cartographique à grille globale ;
commander, lorsque le terminal mobile détecte une instruction d'opération de définition des limites d'un domaine de déplacement, le terminal mobile pour qu'il transmette au robot (P) des informations de coordonnées cartographiques des limites d'un domaine de déplacement incluses dans l'instruction d'opération ; et
convertir, après réception d'un signal de confirmation de réponse du robot (P), un signal de commande tactile formé sur l'écran dans les limites d'un domaine de déplacement et afficher les limites d'un domaine de déplacement sur la carte affichée à l'écran.

3. Procédé de détermination du point de départ de travail selon la revendication 2, dans lequel, sur l'écran du terminal mobile, la carte actuelle (R1) est affichée au-dessus de la carte historique (R2), la carte actuelle (R1) et la carte historique (R2) se chevauchent partiellement ou complètement, et la carte actuelle (R1) et la carte historique (R2) recouvrent partiellement ou complètement la zone non parcourue (R3).

4. Procédé de détermination du point de départ de travail selon la revendication 3, dans lequel la reconnaissance d'un environnement par le robot (P) comprend :
faire correspondre les informations de caractéristiques de l'environnement actuellement recueillies par le robot (P) avec les informations de caractéristiques de l'environnement étant préenregistrées ;
juger, dans le cas où cette correspondance réussit, que les informations de caractéristiques de l'environnement actuellement recueillies appartiennent aux informations de caractéristiques de l'environnement contenues dans la carte historique (R2), lire la carte historique (R2) dans la zone de coordonnées cartographiques préconfigurée, et construire la carte actuelle (R1) de manière à couvrir la carte historique (R2) ;
et juger, dans le cas où cette correspondance échoue, que les informations de caractéristiques de l'environnement actuellement collectées appartiennent à de toutes nouvelles informations de caractéristiques de l'environnement, et construire directement la carte actuelle (R1) dans la zone de coordonnées cartographiques préconfigurée ; dans lequel une zone non recouverte par la carte historique (R2) et la carte actuelle (R1) dans la zone de coordonnées cartographiques préconfigurée est déterminée comme étant la zone non parcourue (R3), et la zone de coordonnées cartographiques préconfigurée est définie sur l'écran du terminal mobile.

5. Procédé de détermination du point de départ de travail selon la revendication 2, dans lequel les limites d'un domaine de déplacement sont définies comme étant un domaine rectangulaire, et les informations cartographiques du domaine rectangulaire reçues par le robot (P) comprennent les coordonnées d'un coin supérieur gauche et les coordonnées d'un coin inférieur droit du domaine rectangulaire ; et
après réception par le robot (P) des informations de coordonnées du domaine rectangulaire, un domaine rectangulaire correspondant est encadré, selon les informations de coordonnées, sur la carte construite par le robot (P), des délimitations virtuelles renfermant le domaine rectangulaire sont déterminées, et la zone de chevauchement de la zone cartographique encadrée par le domaine rectangulaire et la carte construite par le robot (P) est également déterminée.

6. Procédé de commande de mouvement d'un robot (P), comprenant : commander, après la détermination d'un point de départ de travail par le procédé de détermination du point de départ de travail selon l'une quelconque des revendications 1-5, le robot (P) pour qu'il se déplace d'une position actuelle vers le point de départ de travail ;
commander, selon une trajectoire planifiée, le robot (P) pour qu'il parcourt une zone correspondante dans une direction commençant par le point de départ de travail, et commander le robot (P) pour qu'il revienne au point de départ de travail pour continuer à parcourir une zone correspondante dans une direction opposée selon la trajectoire planifiée d'un même type ; et
commander le robot (P) pour qu'il se déplace le long des délimitations des limites d'un domaine de déplacement.

7. Procédé de commande de mouvement selon la revendication 6, comprenant de plus :
définir une zone de pré-jugement entourant chaque délimitation renfermant les limites d'un domaine de déplacement, une quelconque des zones de pré-jugement est une zone où une partie se trouve à l'intérieur des limites d'un domaine de déplacement et l'autre partie se trouve à l'extérieur des limites d'un domaine de déplacement ;
juger, lorsqu'il est détecté que le robot (P) entre dans la zone de pré-jugement dans un processus où le robot (P) parcourt les limites d'un domaine de déplacement, si une direction actuelle du robot fait face à une délimitation des limites d'un domaine de déplacement et si une distance en ligne droite entre le robot (P) et un point de référence est supérieure ou égale à une distance en ligne droite entre le point de référence et un point central de la délimitation, si la direction actuelle du robot fait face à la délimitation des limites d'un domaine de déplacement et si la distance en ligne droite entre le robot (P) et le point de référence est supérieure ou égale à la distance en ligne droite entre le point de référence et le point central de la délimitation, ajuster une direction de déplacement du robot (P) pour qu'elle soit opposée à la direction actuelle du robot (P), et commander le robot (P) pour qu'il continue à se déplacer selon la trajectoire planifiée ou pour qu'il continue à se déplacer le long des délimitations ; et si la direction actuelle du robot (P) ne fait pas face à la délimitation des limites d'un domaine de déplacement, ou si la distance en ligne droite entre le robot (P) et le point de référence est inférieure à la distance en ligne droite entre le point de référence et le point central de la délimitation, commander le robot (P) pour qu'il continue à se déplacer selon la trajectoire planifiée ou à se déplacer le long des délimitations ;
dans lequel le point de référence est un point de coordonnées, le point de coordonnées et le robot (P) sont positionnés sur un même côté de la délimitation des limites d'un domaine de déplacement, et une distance verticale entre le point de coordonnées et le point central de la délimitation des limites d'un domaine de déplacement est égale à une longueur prédéfinie.

8. Procédé de commande de mouvement selon la revendication 6, le procédé comprenant de plus :
juger si le robot (P) parcourt, actuellement, une zone cartographique encadrée par les limites d'un domaine de déplacement ;
sélectionner, après avoir déterminé que le robot (P) parcourt actuellement la zone cartographique encadrée par les limites d'un domaine de déplacement, les limites d'un domaine étant le plus proche, actuellement, du point de départ de travail des limites d'un domaine de déplacement à partir d'autres limites d'un domaine, et déterminer les limites d'un domaine de déplacement qui est sélectionné comme étant les limites d'un domaine cible suivant ; et
commander le robot (P) pour qu'il franchisse une délimitation des limites d'un domaine de déplacement afin de se déplacer vers un point de départ de travail des limites d'un domaine cible suivant ;
dans lequel plus d'une limite de domaine est définie sur la carte construite par le robot (P).
